# EUROPÄISCHE PATENTSCHRIFT

(11) **EP 0 933 194 B1**
(45) Veröffentlichungstag und Bekanntmachung des Hinweises auf die Patenterteilung: **16.06.2004**
(21) Anmeldenummer: 98124798.4
(22) Anmeldetag: 29.12.1998
(51) Int. Cl.: B32B 11/04, B32B 5/18, G10K 11/168, A47L 15/42

(54) **Schalldämpfende Sandwichplatte**
Sound-damping sandwich panel
Panneau sandwich d'isolation acoustique

(30) Priorität: 30.01.1998 DE 19803527
(43) Veröffentlichungstag der Anmeldung: 04.08.1999
(73) Patentinhaber: CWW-GERKO Akustik GmbH, 67547 Worms (DE)
(72) Erfinder: Freist, Christoph, Dr. Ing., 33613 Bielefeld (DE); Polak, Josef, Dr., 55294 Bodenheim (DE)
(74) Vertreter: Hebing, Norbert

(56) Entgegenhaltungen:
- FR-A- 2 432 196
- US-A- 5 094 318

## Beschreibung

Die Erfindung betrifft eine zur Schalldämpfung ausgebildete, schalldämpfende Sandwichplatte mit einer einzigen, über 1 mm dicken, bituminösen Dämpfungsschicht und einer mit dieser durch eine Klebstoffschicht verbundenen weiteren Schicht aus Schaumstoff, Filz oder dergleichen.

Eine solche Sandwichplatte ist Gegenstand des deutschen Gebrauchsmusters 90 13 663.2 U1. Die in dieser Schrift beschriebene Sandwichplatte dient insbesondere zum Entdröhnen des Bodenbleches eines Kraftfahrzeugs. Dabei wird die Sandwichplatte mit ihrer bituminösen Dämpfungsschicht auf das Bodenblech geklebt. In der Schrift wird ausdrücklich angeführt, dass die bituminöse Dämpfungsschicht nur wirksam werden kann, wenn sie vollständig an dem Karosserieteil anliegt und mit diesem fest verklebt ist.

Es sind auch schon Sandwichplatten zur Dämpfung von Eigenschwingungen von metallischen Flächen bekanntgeworden, welche mit einer Schaumstoffschicht auf die zu entdröhnende Fläche geklebt werden und auf die außenseitig auf der Schaumstoffschicht eine Metallfolie geklebt ist. Eine solche Sandwichplatte zeigt beispielsweise die DE 34 08 411 C2. Durch die Metallfolie vermag die Sandwichplatte Schwingungen sehr gut zu dämpfen, sie ist jedoch für viele Anwendungsfälle zu teuer in der Herstellung. Weiterhin eignet sich die in dieser Schrift erläuterte Sandwichplatte wegen ihrer geringen Masse nur zum Dämpfen von Körperschall, nicht jedoch zur gleichzeitigen Schalldämmung.

Bei Spülmaschinen tritt das Problem auf, dass die Wandungen ihres Spülbottichs zu erheblichen Eigenschwingungen neigen, so dass eine Schwingungsdämpfung unerlässlich ist. Gleichzeitig entsteht jedoch im Spülbottich Luftschall, dessen Austritt durch eine Schalldämmung eingeschränkt werden soll. Beides hat man bislang durch eine relativ dicke bituminöse Schicht auf der Außenseite des Spülbottichs verwirklicht. In jüngster Zeit entstand jedoch zusätzlich die Forderung, Spülbottiche von Spülmaschinen auch thermisch zu isolieren, damit der Energieverbrauch beim Spülen möglichst gering ist. Hierbei ist zu bedenken, dass bituminöse Dämpfschichten relativ viel Wärme aufzunehmen und wegen ihrer schwarzen Farbe nach außen abzugeben vermögen und deshalb ein schlechter Wärmeisolator sind.

Die US 5 094 318 beschreibt auch schon eine Sandwichplatte, welche mit einer bituminösen Dämpfungsschicht auf einem akustisch zu verbesserndes Blech aufgebracht ist. Auf der bituminösen Dämpfungsschicht befindet sich eine Folie, dann eine Schaumstoffschicht und auf der Außenseite eine weitere bituminöse Schicht. Auch eine solche Sandwichplatte hat den Nachteil, dass sich die innere, bituminöse Dämpfungsschicht stark erwärmt und ihre Wärme schlecht nach außen abgeben kann.

Die FR 2 048 638 A beschreibt bereits, dass die Haftung zwischen einer bituminösen Schicht und einer Schaumstoffschicht durch eine zwischenliegende Klebstoffschicht verbessert werden kann.

Der Erfindung liegt das Problem zugrunde, eine schalldämpfende Sandwichplatte der eingangs genannten Art so auszubilden, dass mit ihr zugleich eine wesentliche Schalldämmung und thermische Isolation verwirklicht werden kann.

Dieses Problem wird erfindungsgemäß dadurch gelöst, dass die weitere Schicht als thermische Isolationsschicht ausgebildet und mit einer Klebstoffschicht zum Aufkleben auf ein akustisch zu verbesserndes Bauteil versehen ist und dass die bituminöse Dämpfungsschicht sich auf der Außenseite der Sandwichplatte befindet.

Eine solche Sandwichplatte stellt eine Umkehr der Sandwichplatte nach dem eingangs genannten DE 90 13 663.2 U1 dar, indem die durch die bituminöse Schicht gebildete Dämpfungsfolie entgegen der Lehre des Gebrauchsmusters nicht mit dem Blech verklebt wird, sondern außenseitig auf der weiteren Schicht aufliegt. Überraschenderweise zeigte sich, dass trotz des Fehlens einer Metallfolie, durch die die Sandwichplatte unerwünscht teuer würde, eine sehr gute Schwingungsdämpfung und gleichzeitige Schalldämmung zu erreichen ist. Zusätzlich führt die weitere Schicht zu einer guten Wärmedämmung. Da die Wärmedämmung sich zwischen der Wand des Spülbottichs und der bituminösen Schicht befindet, heizt sich die bituminöse Schicht relativ wenig auf. Nach Beendigung des Spül- und Trocknungszyklus der Spülmaschine gibt die bituminöse Schicht die in sie gelangte Wärme wegen der wärmeisolierenden Schicht zwischen ihr und dem Spülbottich nach außen zur Luft und nicht zur Wandung des Spülbottichs hin ab. Dadurch wird vermieden, dass die Wandung des Spülbottichs nach dem Trocknen des Geschirrs von der bituminösen Schicht auf eine erheblich über der Temperatur des Geschirrs liegende Temperatur aufgewärmt wird, wodurch im Inneren des Spülbottichs im Wandbereich von der Luft Feuchtigkeit aufgenommen und sich am kühleren Geschirr niederschlagen würde, so dass es zu einer unerwünschten Kondensatbildung auf dem Geschirr käme. Letzteres wäre der Fall, wenn man die bituminöse Schicht unmittelbar mit der Wandung des Spülbottichs verkleben würde und außenseitig auf der bituminösen Schicht eine wärmeisolierende Schicht aufbrächte.

Da die erfindungsgemäße Sandwichplatte keine Metallfolie benötigt, ist sie sehr kostengünstig in ihrer Herstellung, so dass sie bei Massenwaren Verwendung finden kann, bei denen teure Schalldämmplatten mit Metallfolien aus Kostengründen nicht in Frage kommen.

Besonders kostengünstig ist die Sandwichplatte herstellbar, wenn die weitere Schicht aus einem thermoplastischen Hartschaum wie Polystyrol- oder Polyethylenschaum gebildet ist.

Für den Spülbottich einer Geschirrspülmaschine ergibt sich eine ausreichend hohe Schalldämmung und Schalldämpfung und gleichzeitig eine wesentliche Wärmeisolation, ohne dass die Gefahr einer Kondensatbildung auf dem Geschirr in dem Spülbottich eintritt, wenn gemäß einer anderen Weiterbildung der Erfindung die weitere Schicht eine 6 mm dicke Polystyrolschaumplatte und die bituminöse Dämpfungsschicht Bitumen F 24 von 3,9 mm Dicke und einem Flächengewicht von 6,75 kg/m² ist.

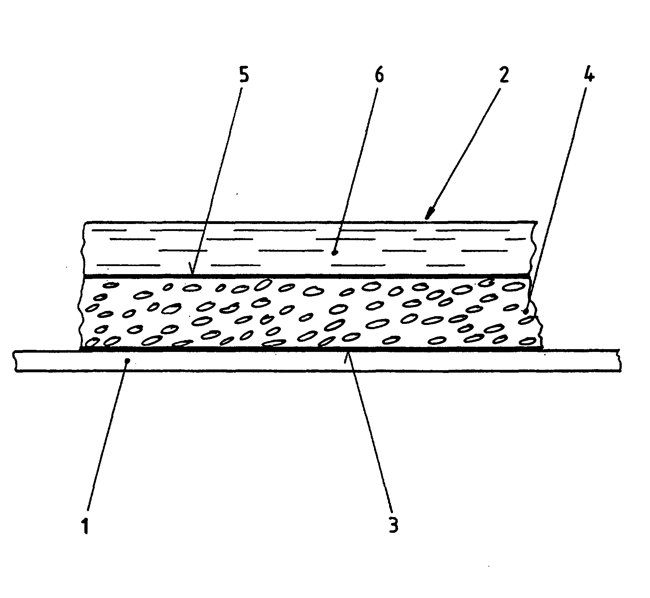

Die Erfindung lässt verschiedene Ausführungsformen zu. Zur weiteren Verdeutlichung ihres Grundprinzips ist eine davon in der Zeichnung dargestellt und wird nachfolgend beschrieben.

Die Zeichnung zeigt einen Teilbereich eines Bauteils 1, bei dem es sich um die Wandung 1 aus 1 mm dickem Stahlblech eines Spülbottichs einer Spülmaschine handelt. Auf dieses Bauteil 1 ist eine Sandwichplatte 2 mit einer Klebstoffschicht 3 geklebt. Diese Klebstoffschicht 3 verbindet eine 6 mm dicke Schicht 4 aus Polystyrolschaum mit dem Bauteil 1. Mit der Schicht 4 ist durch eine weitere Klebstoffschicht 5 eine 3,9 mm dicke bituminöse Dämpfungsschicht 6 verbunden.

Bei der Klebstoffschicht 3 kann es sich um einen Kaltkleber - auch Selbstkleber genannt - handeln, welcher vor dem Aufbringen der Sandwichplatte 2 von Abdeckmaterial abgedeckt ist. In einem solchen Fall braucht man die Sandwichplatte 2 lediglich nach dem Abziehen des Abdeckmaterials gegen die Wandung des Spülbottichs zu drücken. Möglich ist es jedoch auch, für die Klebstoffschicht einen Heißschmelzkleber vorzusehen. Dann drückt man die Sandwichplatte 2 gegen den zuvor erwärmten Spülbottich, so dass der Heißschmelzkleber aktiviert wird und kühlt erforderlichenfalls den Spülbottich anschließend mit Wasser.

Zur Überprüfung der akustischen und thermischen Eigenschaften der erfindungsgemäßen Sandwichplatte wurden bei einer Spülmaschine vom Spülbottich die Oberseite, Rückseite und die rechte und linke Seite, aus konstruktiven Gründen jedoch nicht der Boden des Spülbottichs mit der zuvor beschriebenen Sandwichplatte außenseitig beschichtet. Im Vergleich hierzu wurde der Spülbottich außenseitig ausschließlich mit einer bituminösen Schicht gleicher Beschaffenheit und Dicke wie die auf der Schaumstoffschicht versehen. Es zeigte sich, dass der Schallpegel in einem Raum in einem Meter Abstand von der Spülmaschine in etwa unverändert blieb, der Energieverbrauch für einen Spülvorgang jedoch von 1,6 KWh auf 1,4 KWh sank.

### Bezugszeichenliste

- 1: Bauteil
- 2: Sandwichplatte
- 3: Klebstoffschicht
- 4: Schicht
- 5: Klebstoffschicht

- 6: Dämpfungsschicht

## Patentansprüche

1. Zur Schalldämpfung ausgebildete, schalldämpfende Sandwichplatte mit einer einzigen, über 1 mm dicken, bituminösen Dämpfungsschicht und einer mit dieser durch eine Klebstoffschicht verbundenen weiteren Schicht aus Schaumstoff, Filz oder dergleichen, **dadurch gekennzeichnet, dass** die weitere Schicht (4) als thermische Isolationsschicht ausgebildet und mit einer Klebstoffschicht (3) zum Aufkleben auf ein akustisch zu verbesserndes Bauteil (1) versehen ist und dass die bituminöse Dämpfungsschicht (6) sich auf der Außenseite der Sandwichplatte (2) befindet.

2. Sandwichplatte nach Anspruch 1, **dadurch gekennzeichnet, dass** die weitere Schicht (4) aus einem thermoplastischen Hartschaum wie Polystyrol- oder Polyethylenschaum gebildet ist.

3. Sandwichplatte nach den Ansprüchen 1 oder 2, **dadurch gekennzeichnet, dass** die weitere Schicht (4) eine 6 mm dicke Polystyrolschaumplatte und die bituminöse Dämpfungsschicht (6) Bitumen F 24 von 3,9 mm Dicke und einem Flächengewicht von 6,75 kg/m² ist.

## Claims

1. Sound-absorbing sandwich panel configured for sound damping, with a single bituminous damping layer more than 1 mm thick and an additional layer of foam, felt or the like joined thereto by an adhesive layer, **characterized in that** the additional layer (4) is configured as a thermal insulation layer and is provided with an adhesive layer (3) for sticking on to a component (1) to be acoustically improved and **in that** the bituminous damping layer (6) is on the outside of the sandwich panel (2).

2. Sandwich panel according to Claim 1, **characterized in that** the additional layer (4) is formed from a rigid thermoplastic foam such as polystyrene or polyethylene foam.

3. Sandwich panel according to Claim 1 or Claim 2, **characterized in that** the additional layer (4) is a 6 mm thick polystyrene foam panel, and the bituminous damping layer (6) is Bitumen F 24 of 3.9 mm thickness with a weight per unit area of 6.75 kg/m².

## Revendications

1. Plaque sandwich insonorisante, construite pour l'insonorisation, comprenant une unique couche anti-vibratoire bitumineuse épaisse de plus de 1 mm, et une couche additionnelle de mousse, feutre ou analogue, assemblée à celle-ci par une couche d'adhésif, **caractérisée en ce que** la couche additionnelle (4) est constituée par une couche d'isolation thermique et est munie d'une couche d'adhésif (3) servant à la coller sur un élément (1) qu'il s'agit d'améliorer du point de vue acoustique, et **en ce que** la couche anti-vibratoire (6) se trouve sur le côté extérieur de la plaque sandwich (2).

2. Plaque sandwich selon la revendication 1, **caractérisée en ce que** la couche additionnelle (4) est formée d'une mousse dure thermoplastique telle qu'une mousse de polystyrène ou de polyéthylène.

3. Plaque sandwich selon les revendications 1 ou 2, **caractérisée en ce que** la couche additionnelle (4) est une plaque de mousse de polystyrène épaisse de 6 mm et la couche anti-vibratoire bitumineuse (6) est constituée par du bitume F 24 de 3,9 mm d'épaisseur et d'un poids par unité de surface de 6,75 kg/m².
